(19) Europäisches Patentamt / European Patent Office / Office européen des brevets

(11) **EP 4 647 894 A1**

(12) **EUROPEAN PATENT APPLICATION**

(43) Date of publication:
**12.11.2025 Bulletin 2025/46**

(21) Application number: **24190060.4**

(22) Date of filing: **22.07.2024**

(51) International Patent Classification (IPC):
*G06F 7/58* (2006.01)

(52) Cooperative Patent Classification (CPC):
**G06F 7/588**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.05.2024 EP 24175208**

(71) Applicant: **Xephor Solutions GmbH**
**3002 Purkersdorf (AT)**

(72) Inventor: **OPPL, Konstantin**
**3002 Purkersdorf (AT)**

(74) Representative: **Torggler & Hofmann**
**Patentanwälte - Innsbruck**
**Torggler & Hofmann Patentanwälte GmbH & Co KG**
**Wilhelm-Greil-Straße 16**
**6020 Innsbruck (AT)**

(54) **QUANTUM RANDOM NUMBER GENERATOR**

(57) A computer-implemented method configured to create a non-empty set of random numbers by utilizing the non-deterministic features of a quantum device and the unpredictable outcome of a group operation applied to the elements of a mathematical structure comprising at least a cyclic group with a non-linear behaviour of the group operation, preferably an Abelian variety, as well as a random number generating device comprising a providing device and a quantum computing device, designed to execute the computer-implemented method and a computer program which when the program is executed by a random number generating device, causes the random number generating device to be configured according to the computer-implemented method, and/or to carry out the computer-implementable method.

FIG.: 1

EP 4 647 894 A1

**Description**

## TECHNICAL FIELD

The present invention relates to a method of generating true random numbers using the inherit non-determinism of quantum mechanics present in a quantum computer.

## BACKGROUND

The applications of random numbers in modern technology as well as everyday life are inexhaustible, starting from weather predictions, computer games, the lottery, over Monte Carlo (MC) simulations, cryptography, statistical sampling, one-time passwords (OTPs), pins provided by the bank, CAPTCHAs to machine learning or artificial intelligence (AI) in general.

A true random number is specified mainly by two features, namely uniformity and independence. The former ensures the equiprobability of the generated numbers, while the latter requires the random numbers to be free of correlations between each other.

When it comes to the techniques of generating random numbers one usually differentiates between pseudo random number generators (PRNG) and "true" random number generators (TRNG). PRNGs use arithmetic calculations to create a sequence of random numbers. They are commonly used for simulations of various types, since they are fast and the sequence is reproducible, which allows programmatical errors to be eradicated. On the other hand this is one of the disadvantages of PRNGs, i.e. they are based on a deterministic calculation, a recursion, and thus someone who knows the initial starting number, the seed, can recreate the whole sequence. Furthermore, the length of the sequence of random numbers is limited. This is called the PRNG's period and describes the amount of random numbers that can be produced until the sequence starts to repeat itself.

Aside from the well known linear congruential and Mersenne Twister algorithms a particularly advantageous type of PRNG uses the group structure of Abelian varieties to generate random numbers with improved randomness [WO 2023/283661].

Abelian varieties are a special case of projective varieties and posses the mathematical structure of an algebraic variety as well as the structure of an Abelian group. The elements of an Abelian variety are thus solutions of a system of polynomial equations. In the following these solutions are called points. Due to the group structure of the Abelian variety the points can be combined via the binary operation of the group. The output of this operation besides being still within the Abelian variety, is relatively unpredictable and thus the binary operation of an Abelian variety is a perfect tool to create pseudo-random numbers.

Examples for Abelian varieties are elliptic curves, hyperelliptic curves or Jacobian varieties.

The other method of generating random numbers is presented by true random number generators. They are used whenever a high level of privacy is required and are based on - at least seemingly - random physical phenomena. The downside of these methods lies usually in the uncertainty of true randomness of the physical phenomenon used, i.e. there is no way of telling if the measurement is biased due to some unknown underlying theory.

It is thus desirable to use phenomena with intrinsic randomness. This is where quantum mechanics (QM) comes into play, due to its inherently non-deterministic nature. Additionally, the laws of QM can be used to quantify the quality of the random numbers. These types of generators are called quantum random number generators (QRNG).

While early QRNGs measured for example radioactive decay or the shot noise of a electric circuit, which entail some major drawbacks (i.e. difficulty in handling, slowness, difficulty distinguishing between sources of noise, etc.), we are now in the position of using quantum computers as source for randomness.

The idea of designing a TRNG in form of a quantum circuit that executes on a programmable quantum computer is not new. For example, there are implementations, where the initial state is evolved through a qubit gate in form of a Hadamard or square-root of NOT gate [Pys. Scr. 97 (2022) 065101 and arXiv:2309.05299v2].

Furthermore, an overview of commercially available QRNGs (as of December 2023) can be found in the review article "A Comprehensive Review of Quantum Random Number Generators: Concepts, Classification and the Origin of Randomness" by Vaisakh Mannalatha, Sandeep Mishraa, Anirban Pathak [arXiv:2203.00261v3].

However, the QRNGs according to the state of the art have some major disadvantages that keep them from being suitable for modern applications, that require high speed as well as high randomness, i.e.:

- reduced speed: They are quite slow compared to PRNGs, since some physical phenomenon must be measured and the speed of the generator is limited by the specifics of the certain phenomenon.

- complex technical setup: The measurement device might be difficult to realize and especially in form of measuring radioactive decay might not be without risks to personal safety.

- use of biased data: Usually there is no way of telling if the physical phenomena used to extract random numbers are truly random or are based on an underlying still to be discovered theory.

- bad quality of randomness: Due to the possibility of biased data, including the degree of bias in a theoretically perfect case introduced by the measuring device itself, as well as the fact that in reality the extraction of a random physical phenomenon might cause technical difficulties, the quality of the random numbers produced is often rather bad.

**SUMMARY OF INVENTION**

It is the task of the present invention to obtain at least one random number at an interval of maximum 100 seconds with improved randomness by a quantum true random number generator.

This task is solved by a computer-implemented method according to claim 1, a random number generating device according to claim 10 and a computer program according to claim 15.

A computer-implemented method according to the invention compromises the following steps:

- providing at least one non-trivial starting point of a mathematical structure that comprises at least a cyclic group with a non-linear behaviour of the group operation, preferably an Abelian variety, to a quantum computing device,

- on the quantum computing device preparing at least one starting quantum state, based on the at least one non-trivial starting point,

- on the quantum computing device preparing at least one quantum superposition state based on the at least one starting quantum state,

- extracting at least one random number based on the at least one quantum superposition state by performing at least one measurement,

- providing the at least one random number as a result of the method.

Hereby a "set" is meant to be non-empty. It might contain only one element, though.

The term "non-trivial" is meant to describe a point which is not a zero point and/or singularity and/or triple point etc.

A random number generating device according to the invention comprises:

- a providing device,

- a quantum computing device and

- a measurement unit,

where

- the providing device is operable to provide at least one non-trivial starting point of a mathematical structure that comprises at least a cyclic group with a non-linear behaviour of the group operation, preferably an Abelian variety, to the quantum computing device,

- the quantum computing device is operable to prepare at least one starting quantum state based on at least one non-trivial starting point, prepare at least one superposition state based on the at least one starting quantum state and provide at the at least one random number extracted by the measurement unit, and

- the measurement unit is operable to extract at least one random number based on the at least one quantum superposition state by performing at least one measurement.

A computer program according to the invention causes the random number generating device to be configured as described or to carry out the computer-implementable method as described, when the program is executed by a random number generating device.

The computer-implemented method described in claim 1 yields random numbers with improved randomness due to the intrinsic non-deterministic nature of quantum mechanics on which the quantum computer is based. Additionally, the method enables random numbers to be generated quickly and thus is a suitable candidate for use in AI applications.

Due to the hybrid quantum-classical nature of the method and its use of algebraic varieties, the QRNG described by the present application ensures randomness of the output random numbers, in form of qubits and/or classical bits, where a single bit can take the form of a 0 or a 1.

Furthermore, the number of quantum gates within the quantum circuit preparing the superposition states, is not limited and/or does not need to follow a certain requirement such as being odd or even.

Since the computer-implemented method disclosed in claim 1 measures the actual value of the random qubit as well as the frequency of occurence of 1s and 0s, the uniformly distributed random numbers can be easily mapped onto various distributions required for different applications.

The quantum random number generator disclosed in claim 1 has been undergone various tests to ensure the actual randomness of the application. So far it has passed the chi-squared test, the Kolmogorow-Smirnow (KS) test and several die-hard tests (c.f. Table 1 below). Even though, this is no guarantee for complete randomness of the generated numbers, it is still a good indication.

Table 1: statistical test results

| $\chi^2$ | KS | serial | permutation | maximum | correlation | gap (below ,above) |
|---|---|---|---|---|---|---|
| 0.04 | 0.03 | 0.03 | 0.04 | 0.09 | 0.01 | 0.19,0.20 |

## DESCRIPTION OF EMBODIMENTS

In the following the above mentioned mathematical structure is for simplicity and/or better readability stated as Abelian variety. It is to be understood that the in the following mentioned embodiments can also be realised with a mathematical structure other than an Abelian variety, as long as the mathematical structure statistics the requirement of comprising at least a cyclic group with a non-linear behaviour of the group operation.

In a preferred embodiment of the invention, the at least one selecting function is a continuous and/or non-linear function of a selecting input, wherein it is preferred that the selecting input is represented by a matrix. The selecting input might for instance be an element of the Galois group of the field over which the Abelian variety is defined, that is, an automorphism of the field. By this, information about properties of the field, for instance a Galois field, may be included in the process of obtaining starting points on the Abelian variety. An element of the Galois group can be represented by a matrix on the field over which the Abelian variety is defined.

In a preferred embodiment of the invention, the selecting functions are elements of at least one cohomology group of the Abelian variety. The use of cohomological calculations for determining selecting functions provides a systematic way of finding starting points on the Abelian variety which are heterogeneous with respect to the group structure of the Abelian variety. Note that heterogeneous points are not within the same cyclic subgroup of the Abelian variety. By that the application of the group operation to the starting points yields output points of improved randomness.

Alternatively or additionally, the selecting functions can correspond to elements of a structure derived from at least one cohomology group of the Abelian variety, preferably wherein the structure derived from the at least one cohomology group of the Abelian variety is defined from duality and/or bilinear forms.

In a preferred embodiment the at least one cohomology group is

- a first-order cohomology group, wherein a selecting function preferably takes at least one, preferably two, element(s) of the Galois group of the field on which the Abelian variety is defined as input, and/or

- a second-order cohomology group, wherein a selecting function preferably takes a at least one, preferably three, element(s) of the Galois group of the field on which the Abelian variety is defined as input, and/or

- a cohomology group with an order higher than two.

The use of cohomological calculations for determining selecting functions provides a systematic hierarchy of complexity and thus randomness of the resulting random number. The higher the order of the cohomology group, whose elements are being used as selecting functions, the more random the output will be, typically accompanied by the cost of a reduced efficiency.

In an especially preferred embodiment the providing device is realised in the form of a classical computing device. Alternatively, the providing device is part of the quantum computing device and thus the starting points are generated on the quantum device rather than the classical device.

In a preferred embodiment, a set of intermediate states is generated by concatenating the elements of at least one subset of the set of starting states by applying the binary group operation to obtain one output state per subset.

A binary operation $f$ on a set $A$ is a mapping of the elements of the Cartesian product $A \times A$ to $A$, i.e.: $f : A \times A \to A$. Hence, $A$ is closed with respect to $f$.

In a preferred embodiment, the auxiliary register, that provides some arbitrary state, preferably the ground state zero, that is required for initializing at least one initial state, is located on the quantum device.

The auxiliary register may be operable to additionally perform arbitrary arithmetic calculations on the quantum computing device.

Preferably, the at least one initial state is created by sending the intermediate state and the ground state through at least one quantum gate, where the inital state is a superposition of the intermediate state and the ground state. The mathematical operation underlying the quantum gate can be represented in the form:

$$U_F : \mathcal{H}^A \otimes \mathcal{H}^B \to \mathcal{H}^A \otimes \mathcal{H}^B$$

$$|\psi_1\rangle = U_F |\psi_0\rangle = \frac{1}{\#G} \sum_{g \in G} |g\rangle \otimes |f(g)\rangle , \tag{1}$$

where $\mathcal{H}^A$ is the Hilbert space of the intermediate states, $\mathcal{H}^B$ is the Hilbert space of the states provided by the auxiliary register, $\mathcal{H}^A \otimes \mathcal{H}^B$ is the product space of the initial states, $\#G$ is the cardinality of the Abelian group $G$ and $f$ is the map $f : G \to \mathbb{Z}_{\#G}$.

Alternatively, any quantum gate can be used to generate the initial states that creates a non-entangled superposition of the at least one intermediate state with the state provided by the auxiliary register.

In a preferred embodiment, the at least one output state on the product space of the mixed quantum state in form of a superposition is generated by sending the initial state through a quantum circuit, consisting of at least one quantum gate, where the mathematical operation underlying the quantum gate is represented by $U_F$ from above.

Alternatively, it may be intended to use a combination of different quantum gates that create the quantum circuit, such as $U_F$, Hadamard operations $H$, phase operations $S = P_{\frac{\pi}{2}}$ or $T = P_{\frac{\pi}{4}}$, NOT operations $\sigma_x$, phase flip operations $\sigma_z$, square-root of NOT operations $R = HSH$, etc.

In a preferred embodiment the quantum computing device measures the at least one quantum output state, such that the superposition collapses and one is left with an eigenstate of the random quantum state. It is especially preferred to perform several measurements in consecutive order. Subsequently one creates a density matrix from the at least one measured output state and extracts a set of random numbers from the density matrix.

In an especially preferred embodiment a reduced density matrix is created from the density matrix by tracing out the part of the quantum state that is due to the auxiliary register. In doing so, one ensures that the subsequently extracted random numbers are of high quality, meaning they are of high randomness.

Alternatively or additionally, it may be intended to count the occurrence of 1s and 0s and thus create at least one random number based on the frequency of occurrence of these qubits.

The at least one random number can then be send to a classical computing device and transformed into a random bitstring by an according software.

The at least one random bitstring is subsequently stored on some storing device or alternatively the at least one random output bitstring is provided as data stream e.g. via the internet.

In an especially preferred embodiment the random numbers are used for a neural network based AI application, that requires high quality random numbers at approximately 100 seconds intervals.

It can be intended to use the generated random numbers as seeds for a classic PRNG and thus improve the randomness of the latter.

In a further preferred embodiment the obtained random numbers are transferred to a quantum device, transformed into qubits and used to perform arbitrary calculations on the quantum device.

In an especially preferred embodiment, the random numbers are used as input for the auxiliary register and thus provide the QRNG with random states to initialize the quantum random number generation process. This enables a probability distribution of the random numbers other than a uniform distribution.

A preferred embodiment of the random number generation device comprises at least one output device operable to display the output data, where display includes visual, auditory and tactile displays.

**BRIEF DESCRIPTION OF DRAWINGS**

The Figures show schematic views of:

Figure 1: a flow chart of the QRNG
Figure 2: a hybrid quantum-classical algorithm for creating random numbers
Figure 3: a sketch of a quantum circuit

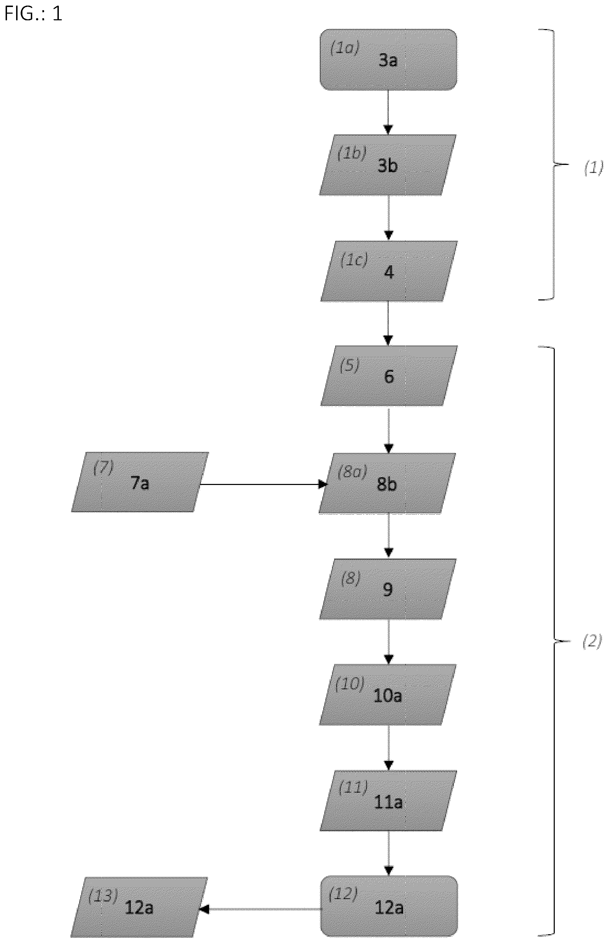

Figure 1 shows a systematic view of the whole random number generation process in form of a flow chart.

A selection unit 1a determines a set of selection functions 3a, where a selection function maps onto a point on a mathematical structure that comprises at least a cyclic group with a non-linear behaviour of the group operation, preferably an Abelian variety.

In a next step an arithmetic unit 1b calculates a set of starting point 3b by evaluating the selection functions 3a. For the further process at least one component of the starting points 3b is needed. By selecting only one component of the set of starting points 3b to form a new set of starting points, it is possible to save storage space and thus decrease the CPU time of the quantum number generation process.

A pre-processing unit 1c subsequently prepares a set of non-entangled input quantum states 4 based on the set of starting points 3b.

On a quantum computing device 2 the at least one input quantum state 4 is getting concatenated by the binary group operation 5 of the cyclic group of the mathematical structure.

An auxiliary register 7 provides at least one initialization state 7a, preferably in the form of the ground state zero. Together with the at least one input quantum state 4 the at least one initialization state 7a is then send through a quantum circuit 8, consisting of at least one quantum gate $U_F$, to form a set of initialized states 8b.

The set of initialized states 8b is in a next step used to obtain a set of output states 9 by sending the initialized states 8b through the quantum circuit 8, which creates superposition states.

In a further step the quantum circuit 10 is used to create a density matrix 10a from the output states 9, which have the form of superpositions. In the process of creating the density matrix 10a at least one measurement is performed, such that the superpositions collapse and one is left with the eigenstates of the quantum states 9. The random numbers 12a can thus be extracted from the diagonal elements of the resulting density matrix 10a.

However, since the output states 9 used to create the density matrix 10a live in a product space $\mathcal{H}^A \otimes \mathcal{H}^B$, with $\mathcal{H}^B$ being the space of the auxiliary register 7, the output states 9 are not entirely random due to the deterministic nature of the auxiliary register 7. It is thus especially preferred to perform a partial trace 11 in order to obtain a reduced density matrix 11a, that is free of the deterministic part of the auxiliary register.

The random numbers 12a with improved randomness can subsequently be extracted from the reduced density matrix 11a by an extraction unit 12.

It is preferred to store the random numbers 12a on a storing device 13, which can be located either on a classical device or a quantum device.

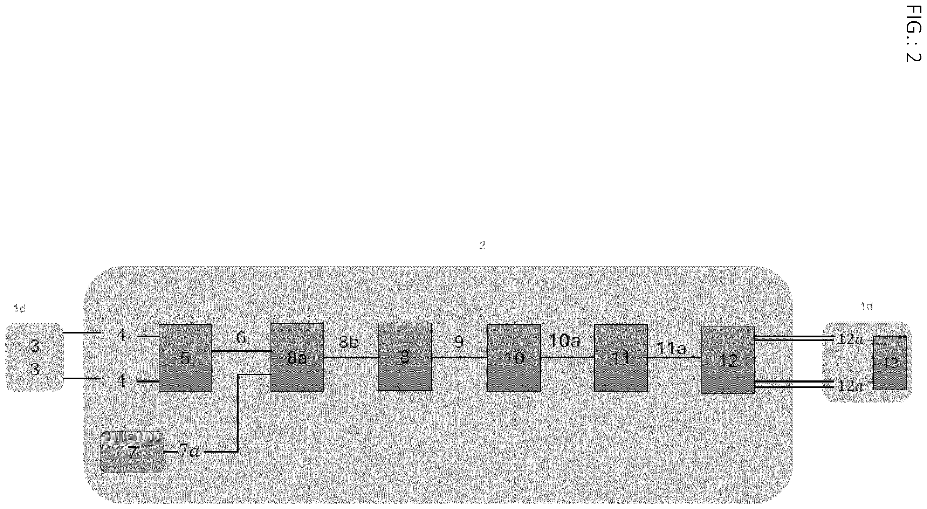

Figure 2 shows a schematic view of a hybrid quantum-classical computer-implemented version of the method disclosed in claim 1 to create random numbers.

The providing device 1 on a classical computing device 1d provides a set of starting points 3, that are getting pre-processed and the resulting set of input quantum states 4 is forwarded to a quantum computing device 2. On the quantum computing device the input quantum states 4 are getting concatenated by applying the binary group operation 5 to the states 4. The resulting intermediate states 6 serve together with the initializing state 7a provided by an auxiliary register 7 as input states for the first quantum gate $U_F$ of the quantum circuit 8 and thus initialize the process of the creation of superposition states 9. The output states 9, which are superpositions of the input states, are subsequently used to create a density matrix 10a. The diagonal elements of the density matrix 10a correspond to random numbers. To improve the randomness of these numbers, a partial trace 11 is performed to obtain a reduced density matrix 11a. An extraction unit 12 extracts the random numbers 12a from the reduced density matrix 11a. In a next step the random numbers are forwarded to the classical computing device 1d and stored on a storing device 13.

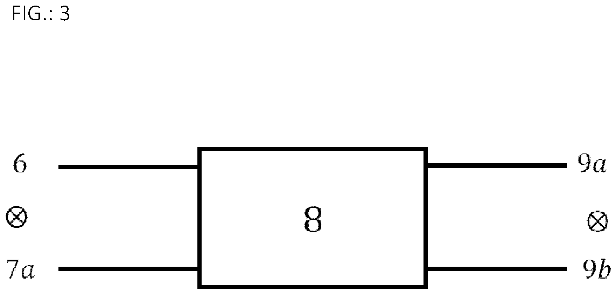

Figure 3 provides a detailed view of the quantum circuit 8, that produces the output states 9, consisting of a superposition of the states 9a and 9b. The first quantum gate $U_F$ within the quantum circuit 8 has the initialization state 7a and the intermediate state 6 as input states and creates a set of initialized output states, which serve as input states for the next quantum gate $U_F$ within the quantum circuit 8. As output one obtains a set of superposition states 9.

In a preferred embodiment the superposition stretches among as many states as required, i.e. the at least one output state is a superposition of as many input states as required.

**REFERENCE SIGNS LIST**

1 providing device

    1a selection unit

    1b arithmetic unit

    1c pre-processing unit

    1d classical computing device

2 quantum computing device
3 (input) classical states

    3a selection functions

    3b starting points

4 (input) quantum states
5 binary group operation
6 quantum states concatenated by binary group operation i.e. intermediate states
7 auxiliary register
7a initialization state from the auxiliary register
8 quantum circuit (to create superpositions) consisting of at least one quantum gate $U_F$

    8a quantum circuit for initialization
    8b initialized quantum states

9 output states

    9a output state a
    9b output state b

10 quantum circuit to create density matrix
10a density matrix
11 quantum circuit to perform partial trace
11a reduced density matrix
12 extraction unit
12a random numbers
13 storing device

**Claims**

1. A computer-implemented method for generating at least one random number, that comprises:

    • providing at least one non-trivial starting point of a mathematical structure that comprises at least a cyclic group with a non-linear behaviour of the group operation, preferably an Abelian variety, to a quantum computing device,
    • on the quantum computing device preparing at least one starting quantum state, based on the at least one non-trivial starting point,
    • on the quantum computing device preparing at least one quantum superposition state based on the at least one starting quantum state,
    • extracting at least one random number based on the at least one quantum superposition state by performing at least one measurement,
    • providing the at least one random number as a result of the method.

2. The method of the preceding claim 1, wherein providing at least one non-trivial starting point on a mathematical structure that comprises at least a cyclic group with a non-linear behaviour of the group operation, preferably an Abelian variety, to a quantum computing device comprises at least:

    • determining, on a classical computing device, a set of selecting functions, where a selecting function maps onto a point on the mathematical structure,
    • evaluating the selecting functions in order to obtain a set of points on the mathematical structure,
    • selecting at least one component of each point to obtain a set of starting points,
    • pre-processing the set of starting points on a classical device to determine the set of, not-entangled, input quantum states, and
    • sending the set of pre-processed starting points to a quantum device via a port, that links the classical device with the quantum device.

3. The method of at least one of the preceding claims, wherein preparing at least one quantum superposition state based on the at least one starting quantum state comprises at least:

    • generating a set of intermediate states on the mathematical structure by applying the group operation of the mathematical structure to at least one of the elements of the set of starting quantum states,
    • initializing an initial state by creating an superposition of the at least one intermediate state with at least one state provided by an auxiliary register, preferably the ground-state zero,
    • generating at least one output state on the product space of the mixed quantum state, where one space belongs to the set of initial quantum states and the other space belongs to the auxiliary register, in form of a superposition by sending the at least one initial state through a quantum circuit , consisting of at least one quantum gate $U_F$, and
    • creating a density matrix from the at least one output state.

4. The method of at least one of the preceding claims, wherein extracting at least one random number based on the at least one quantum superposition state by performing at least one measurement comprises at least:

    • measuring the at least one random quantum state at least one time, such that the at least one state collapses into an eigenstate of the quantum system, and
    • extracting at least one random quantum number from the density matrix.

5. The method of at least one of the preceding claims, wherein providing the at least one random number as a result of the method comprises at least,

    • sending the at least one random number, and preferably the frequency of occurence of 1s and 0s, to a classical device via a port, that links the quantum device with the classical device,
    • post-processing the at least one random number on a classical device to determine the at least one output classical random number preferably in form of a bitstring, and
    • storing the at least one random number on a storing device.

6. The method of at least one of the preceding claims, wherein one additionally performs a partial trace on the density matrix to obtain a reduced density matrix, from which the set of random numbers can be extracted.

7. The method of at least one of the preceding claims, wherein the superposition states are normalized by a factor $\frac{1}{\#G}$ , where #G is the cardinality of the group which contains the quantum states.

8. The method of at least one of the preceding claims, wherein the sequence of random numbers is provided to a classical computing device.

9. The method of at least one of the preceding claims, wherein the sequence of random numbers is used as seed for a pseudo random number generator.

10. A random number generating device, comprising:

    • a providing device,
    • a quantum computing device and

where

  • the providing device is operable to provide at least one non-trivial starting point of a mathematical structure that comprises at least a cyclic group with a non-linear behaviour of the group operation, preferably an Abelian variety, to the quantum computing device,
  • the quantum computing device is operable to prepare at least one starting quantum state based on at least one non-trivial starting point, prepare at least one superposition state based on the at least one starting quantum state and provide at least one random number based on the at least one quantum superposition state, preferably by performing at least one measurement.

11. A random number generating device of the preceding claim 10, wherein the providing device comprises:

  • a selection unit,
  • an arithmetic unit, and
  • a pre-processing unit,

where

  • the selection unit is operable to determine a set of selecting functions, where a selecting function maps onto a point on the mathematical structure,
  • the arithmetic unit is operable to evaluate the selecting functions to obtain a set of starting points and preferably selects at least one component of each starting point, and
  • the pre-processing unit is operable to pre-process the set of starting points to determine the set of, preferably not-entangled, input quantum states.

12. A random number generating device of at least one of the preceding claims, wherein the quantum computing device comprises:

  • a quantum state generation unit which is operable to prepare the set of starting quantum states,
  • a quantum circuit consisting of at least on quantum gate which is operable to generate a set of intermediate states on the mathematical structure by applying the group operation of the mathematical structure to at least one of the elements of the set of starting quantum states,
  • a quantum circuit consisting of at least on quantum gate which operable to generate at least one output state on the product space of the mixed quantum state in form of a superposition,
  • a quantum circuit consisting of at least one quantum gate which is operable to calculate the density matrix of the at least one output state, and
  • an extraction unit which is operable to extract at least one random number from the density matrix.

13. A random number generating device of at least one of the preceding claims, wherein the quantum computing device additionally comprises a quantum circuit, which is operable to perform a partial trace on the superposition states to obtain a reduced density matrix.

14. A random number generating device of at least one of the preceding claims, wherein the random generating device additionally comprises a storing unit, which is operable to store the provided at least one random number.

15. A computer program which when the program is executed by a random number generating device, causes the random number generating device to be configured according to claim 10, and/or to carry out the computer-implementable method of claim 1.

FIG.: 1

FIG.: 2

FIG.: 3

**EUROPEAN SEARCH REPORT**

Application Number

EP 24 19 0060

## DOCUMENTS CONSIDERED TO BE RELEVANT

| Category | Citation of document with indication, where appropriate, of relevant passages | Relevant to claim |
|---|---|---|
| Y | US 2008/052577 A1 (TANAKA AKIHIRO [JP] ET AL) 28 February 2008 (2008-02-28) * paragraph [0002] - paragraph [0007] * * paragraph [0071] - paragraph [0089] * ----- | 1-15 |
| Y,D | WO 2023/283661 A1 (XEPHOR SOLUTIONS GMBH [AT]) 19 January 2023 (2023-01-19) * paragraph [0082] - paragraph [0093] * ----- | 1-15 |
| A | US 2022/357926 A1 (ZHANG YANBAO [JP] ET AL) 10 November 2022 (2022-11-10) * paragraph [0030] - paragraph [0057] * ----- | 1-15 |

**CLASSIFICATION OF THE APPLICATION (IPC)**

INV.
G06F7/58

**TECHNICAL FIELDS SEARCHED (IPC)**

G06F

The present search report has been drawn up for all claims

| Place of search | Date of completion of the search | Examiner |
|---|---|---|
| Munich | 9 January 2025 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 0060

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2025

| Patent document cited in search report | | Publication date | Patent family member(s) | | Publication date |
|---|---|---|---|---|---|
| US 2008052577 | A1 | 28-02-2008 | CN | 101001141 A | 18-07-2007 |
| | | | EP | 1808761 A2 | 18-07-2007 |
| | | | JP | 4883273 B2 | 22-02-2012 |
| | | | JP | 2007187698 A | 26-07-2007 |
| | | | US | 2008052577 A1 | 28-02-2008 |
| WO 2023283661 | A1 | 19-01-2023 | US | 2024176591 A1 | 30-05-2024 |
| | | | WO | 2023283661 A1 | 19-01-2023 |
| US 2022357926 | A1 | 10-11-2022 | CN | 114026535 A | 08-02-2022 |
| | | | EP | 3992776 A1 | 04-05-2022 |
| | | | JP | 7227537 B2 | 22-02-2023 |
| | | | JP | WO2020261419 A1 | 30-12-2020 |
| | | | US | 2022357926 A1 | 10-11-2022 |
| | | | WO | 2020261419 A1 | 30-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023283661 A

**Non-patent literature cited in the description**

- *Pys. Scr.*, 2022, vol. 97, 065101

- **VAISAKH MANNALATHA** ; **SANDEEP MISHRAA** ; **ANIRBAN PATHAK**. *A Comprehensive Review of Quantum Random Number Generators: Concepts, Classification and the Origin of Randomness*